# EUROPÄISCHE PATENTSCHRIFT

(11) **EP 0 272 600 B1**
(45) Veröffentlichungstag und Bekanntmachung des Hinweises auf die Patenterteilung: **07.01.1993**
(21) Anmeldenummer: 87118657.3
(22) Anmeldetag: 16.12.1987
(51) Int. Cl.: H01R 33/965

(54) **Explosions- und schlagwettergeschützte Leuchte**
Explosion-proof light fixture
Lampe antidéflagrante

(30) Priorität: 23.12.1986 DE 3644140
(43) Veröffentlichungstag der Anmeldung: 29.06.1988
(73) Patentinhaber: ABB CEAG Licht- und Stromversorgungstechnik GmbH, D-59494 Soest (DE)
(72) Erfinder: Liedtke, Heinz, D-4600 Dortmund 72 (DE); Atteln, Herbert, D-4630 Bochum (DE); Neumann, Reinhard, D-4044 Kaarst 1 (DE)
(74) Vertreter: Rupprecht, Klaus, Dipl.-Ing.

(56) Entgegenhaltungen:
- DE-C- 2 760 179
- DE-U- 1 616 642
- FR-A- 2 520 163
- GB-A- 500 411
- GB-A- 1 145 297
- GB-A- 2 100 404

## Beschreibung

Die Erfindung betrifft eine explosions- oder schlagwettergeschützte Leuchte nach dem Oberbegriff des Anspruches 1.

Sogenannte Kompaktleuchtstofflampen besitzen einen U-förmigen Glaskörper, dessen Schenkelenden von einem Sokkel umfaßt sind, wobei die Anschlußstifte aus der freien Fläche des Sockels herausragen und dabei in einer Ebene liegen. Je zwei nebeneinanderliegende Anschlußstifte sind mit der im Inneren der Kompaktleuchtstofflampe befindlichen zugehörigen Wendel verbunden. Die Problematik der Kontaktierung der vier Kontaktstifte nach den Anforderungen der Zündschutzart "erhöhte Sicherheit" (DIN EN 50019) besteht darin, daß der Abstand der beiden inneren Kontaktstifte, also derjenigen Kontaktstifte, die nebeneinanderliegen, zu klein ist, so daß die Zündschutzart "erhöhte Sicherheit" nicht besteht.

Aufgabe der Erfindung ist es eine explosions- oder schlagwettergeschützte Leuchte der eingangs genannten Art zu schaffen, bei der eine Kompaktleuchtstofflampe mit einer Fassung versehen ist, wodurch eine explosionsgeschützte Leuchte entsteht.

Diese Aufgabe wird erfindungsgemäß gelöst durch die kennzeichnenden Merkmale des Anspruches 1.

In zweckmaßiger Weise sind die beiden außenliegenden Anschlußstifte mit je einer Anschlußleitung verbunden und die Mittel zur Verlängerung oder Kriech- bzw. Luftstrecken sind zwischen den beiden mittleren Anschlußstiften vorgesehen.

Die Verbindung zwischen den Anschlußstiften und den Anschlußleiten kann gemäß Kennzeichen des Anspruches 3 mittels einer schraubenlosen Klemme oder ggf. gemäß kennzeichnenden Merkmalen des Anspruches 5 mit einer Klemmschraubenverbindung vorgenommen werden. Als schraubenlose Klemme kommen solche Klemmen bevorzugt in Frage, die als Käfigzugfedern von der Firma Wago in Minden vertrieben werden.

Als Mittel zur Vergrößerung der Luft- und Kriechstrecken sind zwischen den mittleren Anschlußstiften eine Nut-und Federanordnung gemäß kennzeichnenden Merkmalen des Anspruches 6 vorgesehen; es besteht auch die Möglichkeit, daß gemäß kennzeichnenden Merkmalen der Ansprüche 7 bzw. 8 eine Abdichtung vorgesehen ist, wodurch die Kriech- bzw. Luftstrecken praktisch unendlich groß werden.

Mit der Erfindung wird die Kriech- und Luftstrecke zwischen den beiden inneren Stiften vergrößert, wodurch Kriechströme und Überschläge sicher vermieden werden. Die Dichtung bewirkt dabei, daß überhaupt keine möglichen Kriech- und Luftstrecken mehr vorhanden sind.

Weitere vorteilhafte Ausgestaltungen der Erfindung sind den weiteren Unteransprüchen zu entnehmen.

Anhand der Zeichnung, in der einige Ausführungsbeispiele der Erfindung dargestellt sind, sollen die Erfindung sowie weitere vorteilhafte Ausgestaltungen und Verbesserungen und weitere Vorteile der Erfindung näher erläutert und beschrieben werden.

Es zeigt
- Figur 1: eine Längsschnittansicht durch die Fassung einer Kompaktleuchte,
- Figur 2: eine Schnittansicht gemäß der Schnittlinie II-II,
- Figur 3: eine Schnittansicht gemäß der Schnittlinie III-III, jeweils der Figur 1,
- Figur 4: eine Schnittansicht durch eine weitere Ausführungsform einer Fassung, ähnlich der der Figur 1,
- Figur 5: eine Schnittansicht gemäß der Schnittlinie IV-IV der Figur 4,
- Figur 6: eine Schnittansicht gemäß der Schnittlinie VI-VI der Figur 4,
- Figur 7: eine Schnittansicht durch eine dritte Ausführungsform einer Fassung,
- Figur 8: eine Schnittansicht gemäß der Schnittlinie VIII-VIII der Figur 7 und
- Figur 9: eine Schnittansicht gemäß der Schnittlinie IX-IX der Figur 7.

An einer U-förmigen Kompaktleuchtstofflampe 10, deren Grundform strichpunktiert dargestellt ist, ist ein Sokkel 11 angebracht, der die beiden Schenkelenden 12 und 13 umfaßt und aus dem Anschlußstifte 14, 15, 16 und 17 herausragen, wobei die Anschlußstifte 14 und 15 bzw. 16 und 17 jeweils mit einer Wendel an jeweils einem Schenkelende 12 bzw. 13 der Kompaktleuchtstofflampe 10 verbunden sind.

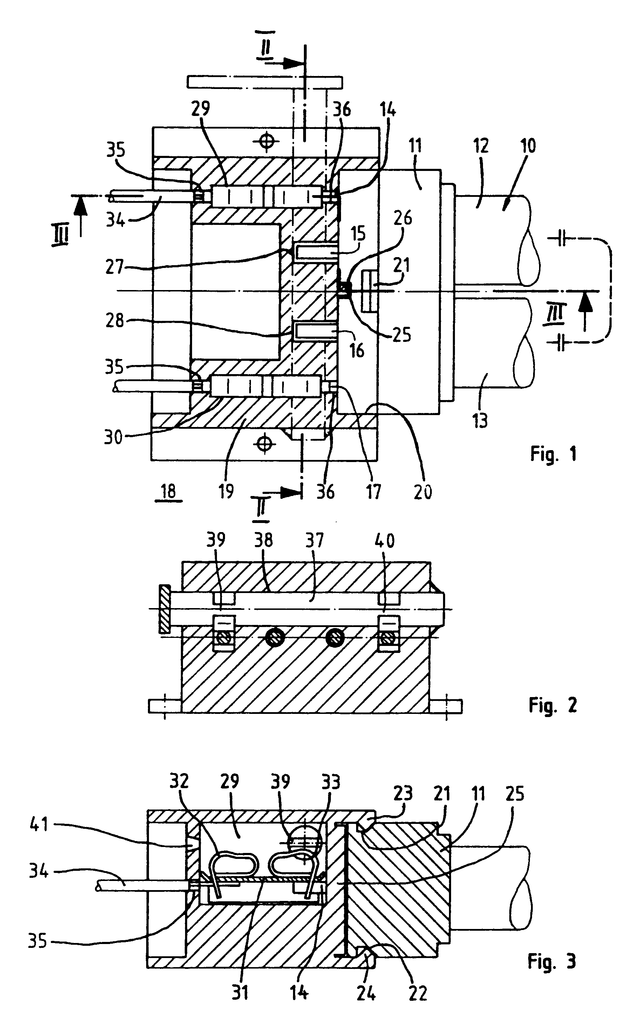

Die Fassung 18, an der der Sockel 11 anschließt, besitzt einen Fassungskörper 19, an dessen rechtem Ende eine Vertiefung 20 angeformt ist, in den das mit den Anschlußstiften 14, 15, 16 und 17 versehene Ende des Sokkels hineingreift und hineinpaßt, wobei, wie aus Figur 3 ersichtlich ist, der Sockel 11 mit Nuten 21 und 22 versehen ist, in die Rastnasen 23 und 24 am Fassungskörper 19 hineingreifen und darin einrasten.

Der Fassungskörper 19 besitzt auf der Fläche, die den Boden der Vertiefung 20 bildet, einen Steg 25, der in eine Nut 26 am Sockel hineinpaßt; der Steg 25 ist am Boden der Vertiefung 20 angeformt und befindet sich zwischen zwei Sacklochbohrungen 27 und 28, in die die Anschlußstifte 15 und 16 im montierten Zustand, d.h. also in dem Zustand, wenn der Sockel 11 mit der Fassung verbunden ist, eingreifen. Beidseitig zu den Sacklochbohrungen 27 und 28 sind Räume 29 und 30 gebildet, in die Kontaktelemente eingesetzt sind, wie weiter unten näher beschrieben werden soll.

Im Inneren des Raumes 29, der in Figur 3 dargestellt ist, erkennt man ein Verbindungsleiterstück 31, an dessen beiden Enden jeweils eine schraubenlose Klemme 32 bzw. 33 befestigt ist, die als Käfigzufeder von der Firma Wago, Minden, bezogen werden kann. Mit der schraubenlosen Klemme 32 wird ein Anschlußleiter 34 und mit der schraubenlosen Klemme 33 der Anschlußstift 17 mit dem Verbindungsleiterstück 31 verklemmt, wobei in den Raum 29 zwei Durchbrüche 35 und 36 durch den Fassungskörper 19 hindurchgreifen, durch die der Anschlußleiter 34 bzw. der Anschlußstift 17 in den Raum 29 zu den Klemmen 32 und 33 einführbar sind. Der Raum 30 ist in gleicher Weise ausgeführt und besitzt ebenfalls die beiden schraubenlosen Klemmen 32 und 33 mit dem Verbindungsleiterstück 31.

Die schraubenlosen Klemmen 32 und 33 können natürlich auch geöffnet werden, was mittels einer Nockenwelle 37 erfolgt, die in einer Querbohrung 38 des Fassungskörpers 19 aufgenommen ist. Die Nockenwelle 37 besitzt an den Stellen, an denen sie die beiden Räume 29 und 30 durchgreift, Verengungen, so daß Stege 39 und 40 gebildet werden, die, wie aus Figur 3 ersichtlich ist, in einer ersten Stellung, in der sie horizontal und damit parallel zu der Ebene, die durch die Anschlußstifte 14 bis 17 gebildet wird, verläuft und die schraubenlose Klemme 33 in der Klemmstellung beläßt, in eine senkrechte Stellung verdrehbar ist, in der sie auf die schraubenlose Klemme 33 drückt und dabei die Klemme öffnet. Für die andere schraubenlose Klemme 32 ist eine Zugangsöffnung 41 zu dem Raum 29 vorgesehen, durch die mit einem Werkzeug auf die Klemme 32 eingewirkt werden kann. Der Steg 25 überdeckt nicht die gesamte Breite des Bodens der Vertiefung 20, sondern endet in geringstem Abstand vor den den Boden begrenzenden, quer zum Verlauf des Steges 25 ausgerichteten Seitenwänden der Vertiefung 20. Über den Steg 25 und die Nut 26 werden die Kriech- bzw. Luftstrecken zwischen den beiden Anschlußstiften 15 und 16 verlängert.

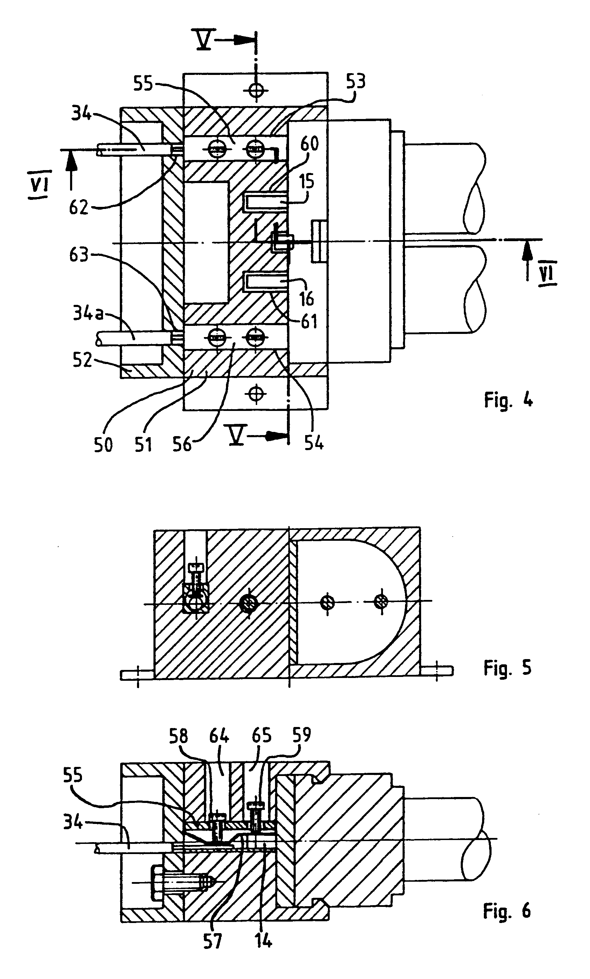

Die Ausführungen gemäß den Figuren 4, 5 und 6 sind Varianten der Ausführungsform nach den Figuren 1 bis 3.

Der Fassungskörper 50 ist aus zwei Körperteilen 51 und 52 zusammengesetzt . Der Körperteil 51 besitzt zwei parallel zueinander verlaufende Längsausnehmungen 53 und 54, in denen je ein Klemmkörper 55 und 56 eingesetzt ist, der eine Klemmfahne 57 enthält, die mit Klemmschrauben 58 und 59 zusammenwirkt. Die Klemmfahne 57 ist dabei so geformt, daß mit ihr sowohl der ralativ dünne Anschlußleiter 34 als auch der Anschlußstift 14 verklemmt werden können. Der Körperteil 51 besitzt zusätzlich wieder die Sacklochbohrungen 60 und 61 zur Aufnahme der Anschlußstifte 15 und 16. Der zweite Körperteil 52 besitzt Durchbrechungen 62 und 63, durch die die beiden Anschlußleiter 34 bzw. 34 A hindurchgesteckt werden können. Damit die Schrauben 58 und 59 zugänglich sind, besitzt der Körperteil 51 jeweils eine kaminartige Öffnung 64 und 65.

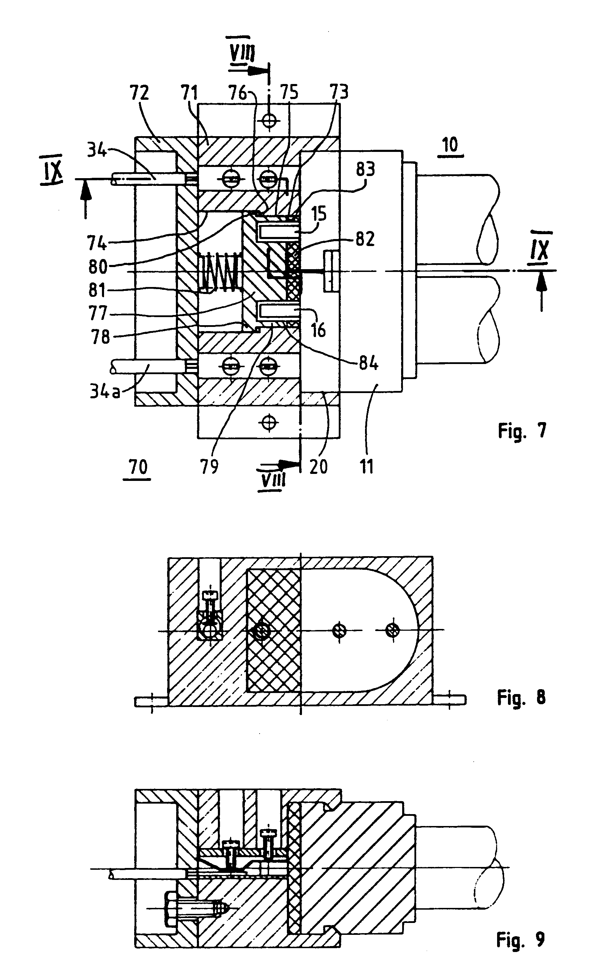

Die Figuren 7, 8 und 9 zeigen weitere Ausgestaltungen der Fassung. Die Fassung 70 besitzt einen ersten Körperteil 71 und einen zweiten Körperteil 72; der erste Körperteil 71 unterscheidet sich von dem Körperteil 51 darin, daß er in dem Bereich zwischen den Längsausnehmungen 53 und 54 einen Durchbruch 73 aufweist, der zwei unterschiedliche Durchbruchweiten aufweist, und zwar ist die Durchbruchweite in dem linken Bereich 74, die den Anschlußleitern 34 und 34 A zugewandt und den Anschlußstiften bzw. der Kompaktleuchtstofflampe 10 abgewandt ist, eine größere Durchbruchsweite als der den Anschlußstiften zugewandte Bereich 75, wobei zwischen beiden eine Stufung 76 vorgesehen ist. Im Inneren des Durchbruches 73 befindet sich ein Schieber 77, der einen dem Bereich 74 angepaßten Abschnitt 78 und einen dem Bereich 75 angepaßten Abschnitt 79 aufweist; aufgrund dieser beiden Bereiche 78 und 79 bildet sich auch am Schieber 77 eine Stufung 80, so daß beim Verschieben des Schiebers innerhalb des Durchbruches 73 der Schiebeweg durch Anlegen der Stufung 80 an die Stufung 76 begrenzt wird.

In dem Raum zwischen dem zweiten Körperteil 72 und dem Schieber 77 befindet sich eine Druckfeder 81, die den Schieber dauernd in Richtung zur Kompaktleuchtstofflampe 10 hin drückt und auf dem entgegengesetzen Ende des Schiebers, also am freien Ende des Abschnittes 79 ist eine Dichtung 82 befestigt, welche gegen die freie Endfläche des Sockels 11 im montierten Zustand dauernd festgedrückt ist. Der Schieber 77 besitzt ebenso wie die Dichtung 81 eine Sacklochbohrung 83 bzw. 84, in die die Anschlußstifte 15 und 16 im montierten Zustand eingreifen.

Während bei den Ausgestaltungen gemäß den Figuren 1 bis 3 bzw. 4 bis 6 eine Vergrößerung der Kriechstrecke durch den Steg bzw. die Nut, die ineinandergreifen, erreicht wird, erhält man bei der Ausgestaltung nach den Figuren 7 bis 9 eine Fassung, bei der der Raum bzw. die Strecke zwischen den beiden inneren Stiften 15 und 16 als elektrisch isoliert zu betrachten ist. Die Dichtung ist vorzugsweise eine Silikondichtung, so daß Abdichtungsprobleme nicht bestehen.

Nachzutragen ist, daß die Länge des Bereiches 79 plus der Dichtung 82 größer ist als die Länge des Bereiches 75 mit geringerer Durchbruchsweite. Dadurch steht dann, wenn die Kompaktleuchtstofflampe 10 nicht montiert ist, die Dichtung immer geringfügig über die Bodenfläche der Vertiefung 20 über, so daß dann, wenn die Leuchtstofflampe 10 montiert ist, zwischen den beiden Stufungen 80 und 76 immer ein gewisser Zwischenraum verbleibt und die Dichtung 82 sicher gegen den Sockel 11 gedrückt wird.

## Patentansprüche

1. Explosions- oder schlagwettergeschützte Leuchte, mit einer Kompaktleuchtstofflampe (10), deren Glaskörper U-förmig gebogen ist, deren Sockel (11) die beiden Schenkelenden (12, 13) des U-förmigen Glaskörpers umschließt und deren Anschlußstifte (14, 15, 16, 17) am Sockel (11) in einer Ebene liegen und in die gleiche Richtung weisen, und mit einer Fassung (18), dadurch gekennzeichnet, daß in der Fassung (18) wenigstens ein Anschlußstift (14, 15; 16, 17) an jedem Schenkelende (12, 13) mit einem Anschlußleiter (34) verbunden ist und daß zwischen den Anschlußstiften (14, 15; 16, 17) jedes Schenkelendes Mittel (25, 26) zur Verlängerung von dazwischen verlaufenden Luft- und Kriechstrecken vorgesehen sind.

2. Leuchte nach Anspruch 1, dadurch gekennzeichnet, daß die beiden außenliegenden Anschlußstifte (14, 17) mit je einem Anschlußleiter (34) verbunden und die Mittel (25, 26) zwischen den beiden mittleren Anschlußstiften vorgesehen sind.

3. Leuchte nach Anspruch 2, dadurch gekennzeichnet, daß zur Verbindung jedes Anschlußstiftes (14, 17) mit dem zugehörigen Anschlußleiter (34) eine schraubenlose Klemmenanordnung (31, 32, 33) vorgesehen ist.

4. Leuchte nach Anspruch 3, dadurch gekenzeichnet, daß oberhalb der, mit den Anschlußstiften (14, 17) in Verbindung stehenden Klemmen (33) der schraubenlosen Klemmenanordnungen (31, 32, 33), eine Nockenwelle (37, 39, 40) geführt ist, deren Nocken (39, 40) mit den Klemmen (33) zusammenwirken.

5. Leuchte nach Anspruch 2, dadurch gekennzeichnet, daß je eine Verbindungsfahne (57) vorgesehen ist, an der je ein Anschlußstift (14, 17) und je ein Anschlußleiter (34) mittels Klemmschrauben (59, 58) angeschlossen sind.

6. Leuchte nach Anspruch 5, dadurch gekennzeichnet, daß jede Verbindungsfahne (57) in jeweils einem Klemmenkörper (55) untergebracht ist, der den Fassungskörper durchgreift.

7. Leuchte nach einem der vorigen Ansprüche, dadurch gekennzeichnet, daß die Mittel (25, 26) als angeformter oder eingeklebter Steg am Sockel und die zugehörige Nut an der Fassung oder umgekehrt ausgebildet sind.

8. Leuchte nach einem der Ansprüche 1 bis 6, dadurch gekennzeichnet, daß als Mittel innerhalb der Fassung eine federnd zum Sockel (11) hin gedrückte Platte (77) vorgesehen ist, auf deren dem Sockel (11) zugewandten Seite eine Dichtungsplatte (82) befestigt ist, die im montierten Zustand der Lampe federnd gegen den Sockel gedrückt ist.

9. Leuchte nach Anspruch 8, dadurch gekennzeichnet, daß die Platte (77) bei ausgebauter Lampe gegen einen Anschlag (76, 80) gedrückt ist und die Dichtungsplatte (82) jene Ebene deutlich überragt, in der sich das Ende des Sockels (11) mit den Anschlußstiften (14, 15) in montiertem Zustand befindet.

10. Leuchte nach Anspruch 9, dadurch gekennzeichnet, daß die Dichtung aus Silikonkautschuk besteht.

## Claims

1. Explosion- or firedamp-protected lamp, comprising a compact fluorescent lamp (10), the glass body of which is bent in a U shape, the base (11) of which encloses the two leg ends (12, 13) of the U-shaped glass body and the connecting pins (14, 15, 16, 17) of which are located in one plane on the base (11) and point in the same direction, and with a holder (18), characterised in that in the holder (18), at least one connecting pin (14, 15; 16, 17) at each leg end (12, 13) is connected to a connecting conductor (34) and in that between the connecting pins (14, 15; 16, 17) of each leg end, means (25, 26) for extending the air and creepage clearances extending there between are provided.

2. Lamp according to Claim 1, characterised in that the two outside connecting pins (14, 17) are connected to one connecting conductor (34) each and the means (25, 26) are provided between the two centre connecting pins.

3. Lamp according to Claim 2, characterized in that a screwless terminal arrangement (31, 32, 33) is provided for connecting each connecting pin (14, 17) to the associated connecting conductor (34).

4. Lamp according to Claim 3, characterized in that above the terminals (33) of the screwless terminal arrangements (31, 32, 33) connected to the connecting pins (14, 17), a camshaft (37, 39, 40) is carried, the cams (39, 40) of which interact with the terminals (33).

5. Lamp according to Claim 2, characterized in that one connecting tab (57) each is provided to which one connecting pin (14, 17) each and one connecting conductor (34) each are connected by means of terminal screws (59, 58).

6. Lamp according to Claim 5, characterised in that each connecting tab (57) is accommodated in each case in one terminal body (55) which passes through the holder body.

7. Lamp according to one of the preceding claims, characterised in that the means (25, 26) are constructed as moulded-on or bonded-in web on the base and the associated groove on the holder or conversely.

8. Lamp according to one of Claims 1 to 6, characterized in that a plate (77) elastically pressed towards the base (11) is provided as means within the holder, on the side of which plate facing the base (11) a sealing plate (82) is attached which is elastically pressed against the base in the assembled state of the lamp.

9. Lamp according to Claim 8, characterized in that, with the lamp removed, the plate (77) is pressed against a stop (76, 80) and the sealing plate (82) clearly projects past the plane in which the end of the base (11) with the connecting pins (14, 15) is located in the assembled state.

10. Lamp according to Claim 9, characterized in that the seal consists of silicone rubber.

## Revendications

1. Organe d'éclairage protégé contre les explosions et les coups de grisou, comportant une lampe à tube fluorescent compacte (10) dont le corps en verre est cintré en forme de U, dont le culot (11) enferme les deux extrémités (12, 13) des branches du corps en verre en forme de U et dont les broches de connexion (14, 15, 16, 17) situées dans un même plan sur le culot (11) sont tournées dans la même direction, et une monture (18), caractérisé par le fait que, dans la monture (18), au moins une broche de connexion (14, 15, 16, 17) à chaque extrémité (12, 13) d'une branche est reliée à un conducteur de raccordement (34) et par le fait qu'il est prévu, entre les broches de connexion (14, 15; 16, 17) de chaque extrémité d'une branche, des moyens (25, 26) pour allonger les trajets des courants de fuite superficiels et dans l'air entre lesdites broches.

2. Organe d'éclairage selon revendication 1, caractérisé par le fait que les deux broches de connexion (14, 17) situées extérieurement sont connectées chacune à un conducteur de raccordement (34) et lesdits moyens (25, 26) sont prévus entre les deux broches de connexion intermédiaires.

3. Organe d'éclairage selon revendication 2, caractérisé par le fait qu'un dispositif à bornes de serrage sans vis (31, 32, 33) est prévu pour connecter chaque broche de connexion (14, 17) au conducteur de raccordement y afférent (34).

4. Organe d'éclairage selon revendication 3, caractérisé par le fait qu'au-dessus des bornes de serrage (33) des dispositifs à bornes de connexion sans vis (31, 32, 33), connectées aux broches de connexion (14, 17), passe un arbre à cames (37, 39, 40) dont les cames (39, 40) coopèrent avec les bornes de serrage (33).

5. Organe d'éclairage selon revendication 4, caractérisé par des cosses de connexion (57), à chacune desquelles une broche de connexion (14, 17) et un conducteur de raccordement (34) sont connectés au moyen de vis de serrage.

6. Organe d'éclairage selon revendication 5, caractérisé par le fait que chaque cosse de connexion (57) est agencée dans un corps de borne de serrage (55) qui traverse le corps de la monture.

7. Organe d'éclairage selon l'une des revendications précédentes, caractérisé par le fait que les moyens (25, 26) sont réalisés sous forme de nervure formée ou rapportée par collage sur le culot et de rainure correspondante aménagée dans la monture, ou inversement.

8. Organe d'éclairage selon l'une des revendications 1 à 6, caractérisé par le fait qu'en tant que moyens il est prévu, à l'intérieur de la monture, une plaque (77) poussée élastiquement en direction du culot (11), cette plaque ayant une face tournée vers le culot (11), sur laquelle est fixée une plaque d'étanchéité (82) qui, lorsque la lampe est à l'état monté, est poussée élastiquement contre le culot.

9. Organe d'éclairage selon revendication 8, caractérisé par le fait que la plaque (77) est appliquée contre une butée (76, 80) lorsque la lampe est retirée, et que la plaque d'étanchéité (82) dépasse nettement le plan dans lequel est située l'extrémité du culot (11) avec les broches en position montée.

10. Organe d'éclairage selon revendication 9, caractérisé par le fait que le joint est en caoutchouc silicone.
